(19) Europäisches Patentamt
European Patent Office
Office européen des brevets

(11) **EP 2 942 783 B1**

(12) **EUROPEAN PATENT SPECIFICATION**

(45) Date of publication and mention
of the grant of the patent:
**25.12.2019 Bulletin 2019/52**

(51) Int Cl.:
*H01B 3/44* *(2006.01)*        *C08L 31/04* *(2006.01)*
*H01B 7/18* *(2006.01)*        *H02G 1/16* *(2006.01)*

(21) Application number: **14305661.2**

(22) Date of filing: **05.05.2014**

(54) **Self-healing cable**

Selbstheilendes Kabel

Câble d'auto-cicatrisation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.11.2015 Bulletin 2015/46**

(73) Proprietor: **Nexans
92400 Courbevoie (FR)**

(72) Inventors:
• **Bacquet, Gérard
78800 Houilles (FR)**
• **Kim, Seong-Jin
Cheongju-si,
Chungcheongbuk-do 361-871 (KR)**
• **Ahn, Dae-Up
Jincheon-gun,
Chungcheongbuk-do 365-805 (KR)**
• **Kim, Kwon-Soon
Heungdeok-gu,
Cheongju-si, Chungcheongbuk-do 361-830 (KR)**
• **Bae, Ji-Hyun
Cheongju, Chungcheongbukdo 360-220 (KR)**
• **Kim, Young-Gu
Jeungpyeong-gun,
Chungcheongbuk-do 368-703 (KR)**

(74) Representative: **Peguet, Wilfried et al
Ipsilon
Le Centralis
63 avenue du Général Leclerc
92340 Bourg-la-Reine (FR)**

(56) References cited:
**EP-A1- 2 610 316        WO-A2-2007/047887
FR-A1- 2 932 605        US-A1- 2003 188 879**

**Description**

The present invention relates to a self-healing cable comprising a self-healing cross-linked material, and to a process of manufacturing said cable.

More particularly, the self-healing cross-linked material is used in electric and/or optical cable(s) as a material surrounding one or several elongated conductors, said conductor(s) being insulated or not.

Cables may be subjected to damage during or after installation, so that cables with a polymeric layer repairing itself after mechanical damage significantly have an improved safety, lifetime, energy efficiency and environmental impact.

In this respect, the document FR-2 932 605 describes a self-healing electrically conductive cable comprising a conductive element surrounded by an insulating layer. The insulating layer incorporates micro-elements containing a polymerizable compound able to polymerize once the micro-element is damaged. Said micro-elements are distributed uniformly in bulk in the insulating layer in the form of long fibers aligned in the longitudinal direction of the cable, short fibers and microspheres.

However, there is a growing need to develop new self-healing cable, especially with improved mechanical properties, and easy to manufacture.

The present invention seeks to provide a new self-healing cable having improved mechanical properties, such as elongation at break, while being easy to process and to manufacture.

To this end, an object of the present invention is a cable comprising an elongated conducting element and a self-healing material surrounding said elongated conducting element, characterized in that the self-healing material is a cross-linked material obtained from a polymeric composition according to claim 1.

The present invention advantageously provides a self-healing material for cable, and more particularly an olefinic cross-linked material, preserving the cross-linked network and the mechanical properties of the material even if the cable is subjected to damage during or after installation. Hence, the cable of the invention significantly has an improved safety, lifetime, energy efficiency and environmental impact, even after mechanical damages.

The expression "hydrophilic moiety" means a moiety that is attracted to, and has a strong affinity to water or other polar solvents. More particularly, the moiety tends to be dissolved by water or other polar solvents.

The expression "amphiphilic compound" means a compound comprising both hydrophilic and hydrophobic properties. More particularly, the amphiphilic compound comprises a lipophilic moiety and a hydrophilic moiety.

The expression "lipophilic moiety", contrary to "hydrophilic moiety", means a moiety that is attracted to, and has a strong affinity to fats, oils, lipids or non-polar solvents such as hexane or toluene. More particularly, the moiety tends to be dissolved by fats, oils, lipids or non-polar solvents such as hexane or toluene.

The polymer matrix A

The polymer matrix A comprises at least one olefin polymer with hydrophilic moiety, said polymer being obtained from at least one olefin monomer.

The term "polymer" means all types of polymers well-known in the art, such as homopolymer, or copolymer such as block copolymer, random copolymer, alternative copolymer or terpolymer.

The polymer of the present invention can be a thermoplastic or an elastomer, which can be cross-linked by technic well-known in the art.

More preferably, the polymer matrix A includes more than 50% by weight of olefin polymer(s) with hydrophilic moiety, more preferably at least 70% by weight of olefin polymer(s) with hydrophilic moiety, and more preferably at least 90% by weight of olefin polymer(s) with hydrophilic moiety.

In a particular embodiment, the polymer matrix A is only composed of one or several olefin polymer(s) with hydrophilic moiety according to the invention.

The hydrophilic moiety of the olefin polymer can contain polar functional groups, which can be selected among hydroxyl, amide, ester, carbonate, ether, ketone, urethane, urea and nitrile groups

The preferred hydrophilic moiety of the olefin polymer is vinyl acetate.

The content of hydrophilic moiety in the olefin polymer can be of at least 20% by weight, more preferably at least 40% by weight, and even more preferably at least 60 % by weight. The hydrophilic moiety content can classically be determined by Fourier transform infrared (FTIR) spectroscopy.

By way of example, the olefin polymer with hydrophilic moiety can be an ethylene copolymer with hydrophilic moiety, such as for example an ethylene vinyl acetate copolymer (EVA).

In a particular embodiment, the olefin polymer with hydrophilic moiety is a non-grafted olefin polymer. For example, the olefin polymer with hydrophilic moiety may not be a maleic anhydride grafted EVA.

The polymeric composition comprises more than 50 % by weight of the polymer matrix A, and more preferably at least 60 % by weight of the polymer matrix A.

The self-healing agent B

The amphiphilic compound, used as self-healing agent in the polymeric composition, is able to form intermolecular interactions with the olefin polymer with hydrophilic moiety, during the healing process.

Intermolecular interactions can be selected among dipole-dipole interactions, hydrogen bonds interactions, ionic bonds interactions, and any combination thereof.

In a preferred embodiment, the amphiphilic compound and the olefin polymer with hydrophilic moiety are compatible together. More particularly, the amphiphilic compound and the olefin polymer with hydrophilic moiety are miscible together at a mixing temperature where the olefin polymer with hydrophilic moiety is in a malleable state. The malleable state of a polymer is well-known in the art and depends on its melting temperature (e.g. molten state) and/or its glass transition temperature.

More particularly, said miscible property can be defined by the Hildebrand solubility parameter ($\delta$) well-known in the art, which is a numerical estimate of the degree of interaction between materials, expressed in (calories per $cm^3$)$^{1/2}$.

The Hildebrand solubility parameter ($\delta$) is the square root of the cohesive energy density that is classically determined by measuring the heat of vaporization, in calories per cubic centimeter of liquid. The experimental estimation of the solubility parameters of slightly volatile compounds can be done by several techniques well-known in the art, such as by swelling tests (Schenderlein et al., 2004), by turbidimetric titration (Schenderlein et al., 2004; Wang, 2003), by viscosity measurements (Wang, 2003) or by inverse gas chromatography (IGC) (Tian and Munk, 1994; Adamska et al., 2008; Sreekanth and Reddy, 2008).

The amphiphilic compound can have a Hildebrand solubility parameter ($\delta$) which is more or less 20% of the Hildebrand solubility parameter of the olefin polymer with hydrophilic moiety, more preferably more or less 10% of the Hildebrand solubility parameter of the olefin polymer with hydrophilic moiety, and even more preferably more or less 5% of the Hildebrand solubility parameter of the olefin polymer with hydrophilic moiety. In a preferred embodiment, the amphiphilic compound can have a Hildebrand solubility parameter substantially equal to the Hildebrand solubility parameter of the olefin polymer with hydrophilic moiety.

The amphiphilic compound of the invention comprises:

- an aliphatic chain, saturated or unsaturated, comprising at least four carbon atoms, as lipophilic moiety, and
- a hydrophilic moiety.

The lipophilic moiety can comprise up to 28 carbon atoms in the aliphatic chain. More preferably, it can comprise an aliphatic chain between 8 to 20 carbon atoms.

The hydrophilic moiety can be an ionic moiety or a non-ionic moiety.

The hydrophilic moiety can be selected among carboxylic acids, precursors of carboxylic acids (e.g. anhydrides), ionic form of carboxylic acids (e.g. carboxylates), esters, amines, amides, alcohols, any derivative thereof, and any combination thereof.

The amphiphilic compound can be a polymeric compound or a non-polymeric compound. More particularly, the amphiphilic compound is different from the olefin polymer with hydrophilic moiety of the polymer matrix A.

In the present invention, the expression "non-polymeric compound" corresponds to a compound which is not a molecule whose structure is composed of multiple repeating monomeric units, identical or different, linked covalently together, and created via polymerization of one or several of said monomeric units.

In a first variant, the amphiphilic compound can be a polymeric compound selected among grafted olefin polymers, polymers with hydrophilic moieties, and any derivative thereof.

Grafted olefin polymers can be maleic anhydride (MAH) grafted olefin polymers (e.g. MAH grafted EVA), or maleic anhydride (MAH) grafted polybutadiene. The hydrophilic moiety of the polymer in said first variant can contain polar functional groups, which can be selected among hydroxyl, amide, ester, carbonate, ether, ketone, urethane, urea and nitrile groups? For example, polymers with hydrophilic moieties can be selected among polyethylene glycols and polyester polyols such as polycaprolactones and adipic acid polyesters.

In a second variant, the amphiphilic compound can be a non-polymeric compound selected among carboxylic acid amphiphiles, amine amphiphiles, amide amphiphiles, alcoholic amphiphiles, ester amphiphiles, ether amphiphiles, derivatives and any combination thereof.

By way of examples of non-polymeric compound,

- carboxylic acid amphiphiles or derivatives can be fatty acids, dodecanedioic acid, zinc stearate, stearic acid, ...etc;
- amine amphiphiles or derivatives can be stearyl amine, 1,12-diaminododecane, ...etc;
- amide amphiphiles or derivatives can be stearic amide, ...etc;
- alcoholic amphiphiles or derivatives can be fatty acids as defined thereafter, bearing at least one hydroxyl group;
- ester amphiphiles or derivatives can be dioctyl sebacate, dibutyl sebacate, dioctyl adipate, dioctyl phthalate,..etc;

- ether amphiphiles or derivatives can be glycol ethers, such as ethylene and diethylene glycol monohexyl ethers, or ethylene, diethylene and triethylene glycol monobutyl ethers.

More preferably, the non-polymeric compound can be advantageously selected among fatty acids and any derivative thereof, and more preferable among low molecular weight fatty acids and any derivative thereof. For example, the non-polymeric compound can have a molecular weight from 100 g/mol to 2000 g/mol.

The expression "fatty acid" means a carboxylic acid with a long aliphatic chain, which is either saturated or unsaturated. More preferably, the fatty acid is a hydroxylated fatty acid with one or several double bond(s).

The aliphatic chain can comprise at least four carbon atoms, and more preferably until 28 carbon atoms.

Fatty acid or any derivative thereof can be selected among oleic acid, ricinoleic acid, and any derivative thereof.

Fatty acid or any derivative thereof can be selected among oil polyols, such as triglycerides. Triglyceride is classically a tri-ester of carboxylic acid and glycerin.

More preferably, the fatty acid can be an oleic derivative such as for example triglycerides of oleic acid, or a ricinoleic derivative such as for example triglycerides of ricinoleic acid.

Oleic acid or any derivative thereof can be easily found in commercially available products such as olive oil. Olive oil can contain oleic acid, linoleic acid and palmitic acid. By way of example, a classical olive oil can comprise from 55 to 83 % by weight of oleic acid, 3.5 to 21% by weight of linoleic acid, and 7.5 to 20 % by weight of palmitic acid, and have a Hildebrand solubility parameter ($\delta$) around 7.87 $(cal/cm^3)^{1/2}$.

Ricinoleic acid or any derivative thereof can be easily found in commercially available products such as castor oil. Castor oil can contain ricinoleic acid, oleic acid and linoleic acid, and is composed of triglyceride of ricinoleic acid. By way of example, a classical castor oil can comprise from 85 to 95 % by weight of ricinoleic acid, 2 to 6 % by weight of oleic acid, and 1 to 5 % by weight of linoleic acid, with a content of 70-90% by weight of triglycerides of ricinoleic acid (i.e. tri-ester of ricinoleic acid and glycerin). Castor oil has a Hildebrand solubility parameter ($\delta$) around 8.90 $(cal/cm^3)^{1/2}$.

In a particular embodiment, the polymeric composition can comprise at least two amphiphilic compounds B according to the invention, and more preferably two non-polymeric amphiphilic compounds.

The polymeric composition can comprise an appropriate amount of one or several amphiphilic compound(s) according to the invention, in order to obtain the desired mechanical properties and self-healing efficiency.

For example, the total amount of amphiphilic compound(s) B in the polymeric composition can be from 0.1 to 100 parts by weight over 100 parts by weight of polymer matrix A, more preferably from 5 to 80 parts by weight over 100 parts by weight of polymer matrix A, more preferably from 10 to 60 parts by weight over 100 parts by weight of polymer matrix A, and even more preferably from 20 to 50 parts by weight over 100 parts by weight of polymer matrix A.

In the present invention, when the compound amounts are expressed according to 100 parts by weight of the polymer matrix A, the polymer(s) included in said polymer matrix A are different from the amphiphilic compound B when the latter is under the form of a polymer.

In a particular embodiment, the self-healing additive(s) includes in the polymeric composition of the present invention, to obtain the self-healing material, are only selected among one or several amphiphilic compounds.

Particular embodiments of the polymeric composition

In a preferred embodiment, the polymeric composition of the invention can comprise:

A. a polymer matrix comprising at least one ethylene vinyl acetate copolymer with a vinyl acetate moiety content of at least 40%, and
B. at least 30 parts by weight of the amphiphilic compound(s) B (i.e. the total amount of amphiphilic compound(s) B in the polymeric composition) over 100 parts by weight of polymer matrix A.

Said preferred embodiment allows to obtain a cross-linked material with a tensile strength healing index and/or an elongation at break healing index, at 80°C during 48h with an applied pressure of 2.8 kPa, of 100%.

Cross-linking polymeric composition

The polymeric composition of the invention can advantageously be halogen-free and/or silicone-free.

The polymeric composition of the present invention can be easily extruded around the elongated conducting element, by well-known technics in the art.

The polymeric composition of the present invention can be cross-linked by well-known technics in the art, such as peroxide cross-linking, e-beam cross-linking, silane cross-linking, sulfur cross-linking, or UV crosslinking.

The polymeric composition can comprise an appropriate amount of one or several cross-linking agent(s), in order to obtain a cross-linked material.

The preferred cross-linking method is the peroxide cross-linking. In this respect, the polymeric composition can further comprise an organic peroxide as cross-linking agent.

By way of example, the polymeric composition can comprise from 0.1 to 10 parts by weight of cross-linking agent(s) over 100 parts by weight of the polymer matrix A, and more preferably from 1.0 to 10 parts by weight of cross-linking agent(s) over 100 parts by weight of the polymer matrix A.

In the present invention, the term "cross-linked" means that the gel content according to the ASTM D2765-01 standard is superior to 40%, more preferably superior to 60%, and more preferably superior to 70%.

Additives and fillers

The polymeric composition of the invention can further comprise stabilizers such as antioxidant(s). By way of example, the polymeric composition can comprise from 0.1 to 10 parts by weight of antioxidant(s) over 100 parts by weight of the polymer matrix A, and more preferably from 0.5 to 10 parts by weight of antioxidant(s) over 100 parts by weight of the polymer matrix A.

The polymeric composition can further comprise well-known organic and/or inorganic additives, such as cross-linking catalyst, UV protector, dyes, processing aids, plasticizers, softeners, extenders, tackifiers, peptisers, pigments, coupling agents, activators, and/or accelerators

The polymeric composition can further comprise well-known flame retardant fillers, such as for example metal hydroxides.

The cable and the self-healing material

In the present invention, the term "cable" indicates an electric cable and/or an optic cable, including at least one elongated electrically conducting element and/or one elongated optically conducting element.

The self-healing material can surround one or several elongated conducting element(s), insulated or not, along the cable.

In particular, the elongated conducting element can be in a central position in the cable.

The elongated conducting element can be a single core conductor such as an electrical wire, or a multicore conductor such as a plurality of wires.

When the elongated conducting element is an elongated electrically conducting element, the latter can be made from a metallic material such as one selected among aluminum, aluminum alloy, copper, copper alloy, and any combination thereof.

The cross-linked material of the invention can advantageously be an extruded material, such as an extruded material along the elongated conducting element.

The self-healing cross-linked material can be a material selected among an insulating layer, a protecting jacket, a bedding, and any combination thereof. The bedding aims usually at filling voids inside the cable.

The self-healing cross-linked material can be a layer physically in direct contact with said elongated conducting element, an intermediate layer around the elongated conducting element, or the outermost layer of the cable.

Depending of the electrical properties wanted around the elongated conducting element of the cable, the cross-linked material can be an electrically conductive material, a semi-conductive material or an electrically insulating material.

Furthermore, in the polymeric composition as well as in the cross-linked material (final product), the amphiphilic compound B is not able to chemically react with the olefin polymer with hydrophilic moiety, in order to form covalent bonds between the amphiphilic compound B and the olefin polymer with hydrophilic moiety. This characteristic advantageously allows to preserve the cross-linked network and the mechanical properties of the cross-linked material even if said material is subjected to damage.

Another object of the present invention is a process of manufacturing the cable according to any of the preceding claims, characterized in that the process comprises the following steps:

    i. mixing the polymeric composition ;
    ii. applying the mixed polymeric composition around the elongated conducting element; and
    iii. cross-linking the polymeric composition of step ii, to obtain the cross-linked material surrounding the elongated conducting element.

The mixing step i can be done at an appropriate temperature to render the polymer matrix malleable, depending on its melting temperature (e.g. molten state) and/or its glass transition temperature, in order to obtain a homogeneous mixture between the polymer matrix and the amphiphilic compound(s) incorporated into the polymer matrix. Alternatively, a polymeric master-batch of the amphiphilic compound(s) can be firstly prepared, and then incorporated in the polymer matrix A.

The step ii can consist in extruding the polymeric composition around the elongated conducting element, thanks to an extruder. Usually at the outside of the extruder, the extruded polymeric composition is substantially not cross-linked.

The steps i and ii can advantageously be done at a temperature which is not sufficient to crosslink the olefin polymer with hydrophilic moiety.

In the present invention, the term "not cross-linked" means that the gel content according to the ASTM D2765-01 standard is inferior to 20%, more preferably inferior to 10%, more preferably inferior to 5%, and more preferably of 0%.

The cross-linking step iii can be done for example by heating the applied polymeric composition of step ii, when the composition includes an organic peroxide as cross-linking agent. But other types of crosslinking reactions well-known in the art can be involved in the scope of the present invention.

The present invention will become more fully understood from the examples given herein below and from the drawings, which are given by way of illustration only, and wherein:

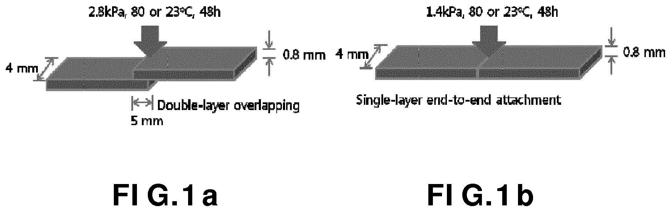

- Figure 1a represents the healing test procedure related to a double-layer overlapping;
- Figure 1b represents the healing test procedure related to an end-to-end attachment.

Polymeric compositions

Different compositions according to the present invention have been prepared and are gathered in the Table 1 as below.

The amounts in Table 1 are expressed in parts by weight over 100 parts by weight of the polymer matrix. In Table 1, the polymer matrix is only constituted by a copolymer of ethylene vinyl acetate (Polymers A1, A2 or A3).

**Table 1**

| Polym eric Com positions | C1 | C2 | C3 | C4 | C5 | C6 | C7 | C8 | C9 | C10 |
|---|---|---|---|---|---|---|---|---|---|---|
| Polymer A1: EVA28 | 100 | 100 | 0 | 0 | 0 | 0 | 0 | 0 | 0 | 0 |
| Polymer A2: EVA45 | 0 | 0 | 100 | 0 | 100 | 100 | 0 | 100 | 100 | 100 |
| Polymer A3: EVA70 | 0 | 0 | 0 | 100 | 0 | 0 | 100 | 0 | 0 | 0 |
| Self-healing additive B1 | 0 | 10 | 10 | 10 | 0 | 0 | 0 | 0 | 0 | 0 |
| Self-healing additive B2 | 0 | 10 | 20 | 10 | 0 | 0 | 0 | 10 | 0 | 20 |
| Self-healing additive B3 | 0 | 5 | 20 | 5 | 0 | 0 | 0 | 0 | 0 | 0 |
| Self-healing additive B4 | 0 | 5 | 10 | 5 | 0 | 0 | 0 | 0 | 0 | 0 |
| Self-healing additive B5 | 0 | 0 | 0 | 20 | 0 | 0 | 0 | 0 | 0 | 0 |
| Self-healing additive B6 | 0 | 0 | 0 | 0 | 20 | 0 | 0 | 0 | 0 | 0 |
| Self-healing additive B7 | 30 | 0 | 20 | 0 | 0 | 20 | 20 | 20 | 20 | 30 |
| Self-healing additive B8 | 0 | 0 | 0 | 0 | 0 | 0 | 0 | 0 | 10 | 0 |
| Self-healing additive B9 | 0 | 20 | 0 | 0 | 0 | 0 | 0 | 0 | 0 | 0 |
| Cross-linking agent | 2 | 2 | 2 | 2 | 2 | 2 | 2 | 2 | 2 | 2 |
| Additives | 3 | 3 | 3 | 3 | 3 | 3 | 3 | 3 | 3 | 3 |

The different compounds listed in Table 1 are as follows:

- EVA28 is a copolymer of ethylene and vinyl acetate (EVA), commercialized by Arkema, under the reference Evatane 28-05, and having a vinyl acetate content around 28 % by weight (Hildebrand solubility parameter ($\delta$) = 8.5);
- EVA45 is a copolymer of ethylene and vinyl acetate, commercialized by Dupont, under the reference Evaflex 45LX, and having a vinyl acetate content around 45 % by weight (Hildebrand solubility parameter ($\delta$) = 9.0);
- EVA70 is a copolymer of ethylene and vinyl acetate, commercialized by Lanxess K.K., under the reference Levaprene 700HV, and having a vinyl acetate content around 70 % by weight (Hildebrand solubility parameter ($\delta$) = 9.3);
- Self-healing additive B1 is a polymeric amphiphilic compound of maleic anhydride-grafted EVA, commercialized by DuPont, under the reference Fusabond C190 (Hildebrand solubility parameter ($\delta$) = 9.0 $(cal/cm^3)^{1/2}$);
- Self-healing additive B2 is a non-polymeric amphiphilic compound of zinc stearate, commercialized by Han-il CHem Co., under the reference Zn-st (Hildebrand solubility parameter ($\delta$) = 8.80 $(cal/cm^3)^{1/2}$);

- Self-healing additive B3 is a non-polymeric amphiphilic compound of stearic amide, commercialized by Fine Organics, under the reference Finawax S (Hildebrand solubility parameter ($\delta$) = 9.0 $(cal/cm^3)^{1/2}$);
- Self-healing additive B4 is a non-polymeric amphiphilic compound of stearyl amine, commercialized by AkzoNobel, under the reference Armeen 18D (Hildebrand solubility parameter ($\delta$) = 10.0 $(cal/cm^3)^{1/2}$);
- Self-healing additive B5 is a non-polymeric amphiphilic compound of dioctyl sebacate, commercialized by Geo-Young, under the reference DOS (Hildebrand solubility parameter ($\delta$) = 8.60 $(cal/cm^3)^{1/2}$);
- Self-healing additive B6 is a non-polymeric amphiphilic compound of olive oil including a content of oleic acid of 55-83% by weight, commercialized by CJ CheilJedang Co. under the reference Olive oil (Hildebrand solubility parameter ($\delta$) = 7.87 $(cal/cm^3)^{1/2}$);
- Self-healing additive B7 is a non-polymeric amphiphilic compound of castor oil including a content of ricinoleic acid triglycerides of 85-95% by weight, commercialized by Dong Yang Oil Chemical, under the reference Casto oil (Hildebrand solubility parameter ($\delta$) = 8.90 $(cal/cm^3)^{1/2}$);
- Self-healing additive B8 is a non-polymeric amphiphilic compound of stearic acid, commercialized by LG Household & Health care, under the reference ST (Hildebrand solubility parameter ($\delta$) = 7.74 $(cal/cm^3)^{1/2}$);
- Self-healing additive B9 is a polymeric amphiphilic process aid of adipic acid polyester, commercialized by ADEKA Co., under the reference PN-1030 (Hildebrand solubility parameter ($\delta$) = 10.0 $(cal/cm^3)^{1/2}$);
- Cross-linking agent is an organic peroxide commercialized by NOF Co., under the reference PBP-98;
- Additives is an antioxidant commercialized by RheinChemie, under the reference Rhenogran PCD-50.

Cross-linked materials preparation

The polymeric compositions C1 to C10 of Table 1 are prepared to evaluate their self-healing efficiency.

In this respect, the process of preparation of said polymeric compositions is a follows:
In a first step, the constituents of each polymeric composition listed in Table 1 are mixed in a two-roll-mill at a temperature of 80°C.

Then in a second step, the mixed compositions are respectively cured in a compression mold at 170°C, in order to obtain cross-linked materials.

Healing test procedure

The healing test procedure concerns:

- a first healing test as represented in Figure 1a; and
- a second healing test as represented in Figure 1b.

The first healing test is a "double-layer overlapping", with an applied pressure of 2.8 kPa at 80°C or 23°C, during 48h.

The second healing test is a "end-to-end attachment", with an applied pressure of 1.4 kPa at 80°C or 23°C, during 48h.

The healing effect is evaluated by the healing index described in the below Table 2:

**Table 2**

| | Tensile strength (TS) healing index (%) | Elongation at break (EB) healing index (%) |
|---|---|---|
| Healing index at room temperature | $\left(\dfrac{TS\ (after\ healing)}{TS\ (initial)}\right)_{at\ 23°C} \times 100$ | $\left(\dfrac{EB\ (after\ healing)}{EB\ (initial)}\right)_{at\ 23°C} \times 100$ |
| Healing index at hot temperature | $\left(\dfrac{TS(after\ healing)}{TS\ Stenght\ (initial)}\right)_{at\ 80°C} \times 100$ | $\left(\dfrac{EB\ (after\ healing)}{EB\ (initial)}\right)_{at\ 80°C} \times 100$ |

Tensile strength (TS) and Elongation at break (EB) (absolutes values) are measured according to IEC 60811-1-1 standard.

More the healing index is high, more the self-healing property is optimized and rapid.

In the present invention, the tensile strength healing index (of the cross-linked material) with an applied pressure of 2.8 kPa at 80°C during 48h, with the double-layer overlapping test, is at least 30%, more preferably at least 50%, more preferably at least 80%, and even more preferably of 100%.

The elongation at break healing index (of the cross-linked material) with an applied pressure of 2.8 kPa at 80°C during 48h, with the double-layer overlapping test, is at least 30%, more preferably at least 50%, more preferably at least 80%, and even more preferably of 100%.

Mechanical results

Results healing index of the compositions in Table 1 are gathered in the following Table 3, with healing test done with an applied pressure of 2.8 kPa at 80°C during 48h. The healing test used in Table 3 is the double-layer overlapping test.

**Table 3**

|  | C1 | C2 | C3 | C4 | C5 | C6 | C7 | C8 | C9 | C10 |
|---|---|---|---|---|---|---|---|---|---|---|
| Initial TS (MPa) | 17 | 7.4 | 1.7 | 1.3 | 8.2 | 13 | 3.2 | 4.0 | 4.2 | 2.1 |
| TS after healing at 80 °C (MPa) | 5.3 | 7.4 | 1.7 | 1.3 | 2.5 | 6.4 | 2.5 | 4.0 | 4.2 | 2.1 |
| TS Healing index (%) | 31 | 100 | 100 | 100 | 30 | 49 | 78 | 100 | 100 | 100 |
| Initial EB (%) | 730 | 550 | 680 | 820 | 840 | 960 | 1350 | 840 | 790 | 680 |
| EB after healing (%) at 80 °C | 510 | 550 | 680 | 820 | 710 | 830 | 1300 | 840 | 790 | 680 |
| EB Healing index (%) | 70 | 100 | 100 | 100 | 85 | 55 | 96 | 100 | 100 | 100 |

The compositions in Table 1 are also self-healing at room temperature (i.e. 23°C). Some results of healing index are gathered in the following Table 4, with healing test done with an applied pressure of 2.8 kPa at 23°C during 48h. The healing test used in Table 4 is the double-layer overlapping test.

**Table 4**

|  | C2 | C3 | C5 | C7 | C8 | C10 |
|---|---|---|---|---|---|---|
| Initial TS (MPa) | 7.4 | 1.7 | 8.2 | 3.2 | 4.0 | 2.1 |
| TS after healing at 23 °C (MPa) | 2.0 | 0.27 | 0.57 | 1.0 | 0.67 | 0.55 |
| TS Healing index (%) | 27 | 16 | 7 | 31 | 17 | 26 |
| Initial EB (%) | 550 | 680 | 840 | 1350 | 840 | 680 |
| EB after healing (%) at 23 °C | 210 | 40 | 240 | 710 | 130 | 140 |
| EB Healing index (%) | 38 | 6 | 29 | 53 | 15 | 21 |

According to the results gathered in Tables 3 and 4, the cross-linked material of the present invention allows advantageously to provide an olefinic self-healing, preserving the cross-linked network and the mechanical properties of the material even if the cross-linked material is subjected to mechanical damage.

Indeed, for the polymeric compositions according to the invention with the healing test at 80°C during 48h, the tensile strength healing index is of at least 30%, and the elongation at break healing index is of at least 50% (see compositions C1 to C10 in Table 3).

And the tensile strength and elongation at break healing indexes, with the healing test at 23°C during 48h, related to compositions C2, C3, C5, C7, C8 and C10 (see Table 4), are of at least 6%.

**Claims**

1. Cable comprising an elongated conducting element and a self-healing material surrounding said elongated conducting element, **characterized in that** the self-healing material is a cross-linked material obtained from a polymeric composition comprising:

    A. a polymer matrix comprising at least one olefin polymer with hydrophilic moiety, said hydrophilic moiety containing polar functional groups, and
B. at least one amphiphilic compound, as self-healing additive, the amphiphilic compound comprising:

- an aliphatic chain, saturated or unsaturated, comprising at least four carbon atoms, as lipophilic moiety, and
- a hydrophilic moiety,

the polymeric composition comprising more than 50% by weight of the polymer matrix A.

2. Cable according to claim 1, **characterized in that** the olefin polymer with hydrophilic moiety is an ethylene vinyl acetate copolymer.

3. Cable according to claim 1 or 2, **characterized in that** the polymer matrix A is only composed of one or several olefin polymer(s) with hydrophilic moiety.

4. Cable according to any of the preceding claims, **characterized in that** the amphiphilic compound is able to form intermolecular interactions with the olefin polymer with hydrophilic moiety, during the healing process.

5. Cable according to any of the preceding claims, **characterized in that** the amphiphilic compound and the olefin polymer with hydrophilic moiety are compatible together.

6. Cable according to any of the preceding claims, **characterized in that** the hydrophilic moiety is selected among carboxylic acid, precursors of carboxylic acids, ionic form of carboxylic acids, esters, amines, amides, alcohols, any derivative thereof, and any combination thereof.

7. Cable according to any of the preceding claims, **characterized in that** the amphiphilic compound is a polymeric compound selected among grafted olefin polymers, polymers with hydrophilic moities, and any derivative thereof.

8. Cable according to any of the preceding claims, **characterized in that** the amphiphilic compound is a non-polymeric compound selected among fatty acids and any derivative thereof.

9. Cable according to claim 8, **characterized in that** the fatty acid is selected among oleic acid, ricinoleic acid and any derivative thereof.

10. Cable according to claim 8 or 9, **characterized in that** the fatty acid is triglycerides of oleic acid or triglycerides of ricinoleic acid.

11. Cable according to claim 8 or 9, **characterized in that** the fatty acid is selected among oil polyols.

12. Cable according to any of the preceding claims, **characterized in that** the polymeric composition comprises at least two amphiphilic compounds B.

13. Cable according to any of the preceding claims, **characterized in that** the polymeric composition comprises:

A. the polymer matrix comprising at least one ethylene vinyl acetate copolymer with a vinyl acetate moiety content of at least 40%, and
B. at least 30 parts by weight of the amphiphilic compound(s) over 100 parts by weight of polymer matrix A.

14. Cable according to any of the preceding claims, **characterized in that** the polymeric composition further comprises an organic peroxide as cross-linking agent.

15. Cable according to any of the preceding claims, **characterized in that** the cross-linked material is an extruded material.

16. Cable according to any of the preceding claims, **characterized in that** said cross-linked material is a material selected among an insulating layer, a protecting jacket, and a bedding.

17. Cable according to any of the preceding claims, **characterized in that** said polymer matrix A comprises more than 50% by weight of olefin polymer(s) with hydrophilic moiety.

18. Process of manufacturing the cable according to any of the preceding claims, **characterized in that** the process comprises the following steps:

> i. mixing the polymeric composition;
> ii. applying the mixed polymeric composition around the elongated conducting element; and
> iii. cross-linking the polymeric composition of step ii, to obtain the cross-linked material surrounding the elongated conducting element.

## Patentansprüche

1. Kabel, das ein längliches leitendes Element und ein selbstheilendes Material umfasst, das das längliche leitende Element umgibt, **dadurch gekennzeichnet, dass** das selbstheilende Material ein vernetztes Material ist, das aus einer polymeren Zusammensetzung erhalten wird, umfassend:

> A. eine Polymermatrix, die zumindest ein Olefinpolymer mit hydrophiler Einheit umfasst, wobei die hydrophile Einheit polare funktionelle Gruppen enthält, und
> B. zumindest eine amphiphile Verbindung als selbstheilenden Zusatzstoff, wobei die amphiphile Verbindung umfasst:
>
>> - eine aliphatische Kette, die gesättigt oder ungesättigt ist, die zumindest vier Kohlenstoffatome umfasst, als lipophile Einheit, und
>> - eine hydrophile Einheit,

wobei die polymere Zusammensetzung mehr als 50 Gew.-% der Polymermatrix A umfasst.

2. Kabel nach Anspruch 1, **dadurch gekennzeichnet, dass** das Olefinpolymer mit hydrophiler Einheit ein Ethylenvinylacetatcopolymer ist.

3. Kabel nach Anspruch 1 oder 2, **dadurch gekennzeichnet, dass** die Polymermatrix A nur aus einem oder mehreren Olefinpolymeren mit hydrophiler Einheit zusammengesetzt ist.

4. Kabel nach einem der vorstehenden Ansprüche, **dadurch gekennzeichnet, dass** die amphiphile Verbindung in der Lage ist, während des Heilungsprozesses in intermolekulare Wechselwirkungen mit dem Olefinpolymer mit hydrophiler Einheit zu treten.

5. Kabel nach einem der vorstehenden Ansprüche, **dadurch gekennzeichnet, dass** die amphiphile Verbindung und das Olefinpolymer mit hydrophiler Einheit miteinander kompatibel sind.

6. Kabel nach einem der vorstehenden Ansprüche, **dadurch gekennzeichnet, dass** die hydrophile Einheit aus Carbonsäure, Vorläufern von Carbonsäuren, ionischen Formen von Carbonsäuren, Estern, Aminen, Amiden, Alkoholen, beliebigen Derivaten davon und einer beliebigen Kombination davon ausgewählt ist.

7. Kabel nach einem der vorstehenden Ansprüche, **dadurch gekennzeichnet, dass** die amphiphile Verbindung eine polymere Verbindung ist, die aus gepfropften Olefinpolymeren, Polymeren mit hydrophilen Einheiten und einem beliebigen Derivat davon ausgewählt ist.

8. Kabel nach einem der vorstehenden Ansprüche, **dadurch gekennzeichnet, dass** die amphiphile Verbindung eine nicht polymere Verbindung ist, die aus Fettsäuren und einem beliebigen Derivat davon ausgewählt ist.

9. Kabel nach Anspruch 8, **dadurch gekennzeichnet, dass** die Fettsäure aus Ölsäure, Ricinolsäure und einem beliebigen Derivat davon ausgewählt ist.

10. Kabel nach Anspruch 8 oder 9, **dadurch gekennzeichnet, dass** die Fettsäure Triglyzeride von Ölsäure oder Triglyzeride von Ricinolsäure ist.

11. Kabel nach Anspruch 8 oder 9, **dadurch gekennzeichnet, dass** die Fettsäure aus Ölpolyolen ausgewählt ist.

**12.** Kabel nach einem der vorstehenden Ansprüche, **dadurch gekennzeichnet, dass** die polymere Zusammensetzung zumindest zwei amphiphile Verbindungen B umfasst.

**13.** Kabel nach einem der vorstehenden Ansprüche, **dadurch gekennzeichnet, dass** die polymere Zusammensetzung umfasst:

A. die polymere Matrix, die zumindest ein Ethylenvinylacetatcopolymer mit einem Vinylacetateinheit-Gehalt von zumindest 40 % umfasst, und

B. zumindest 30 Gewichtsteile der einen oder mehreren amphiphilen Verbindungen bezogen auf 100 Gewichtsteile Polymermatrix A.

**14.** Kabel nach einem der vorstehenden Ansprüche, **dadurch gekennzeichnet, dass** die polymere Zusammensetzung ferner ein organisches Peroxid als Vernetzungsmittel umfasst.

**15.** Kabel nach einem der vorstehenden Ansprüche, **dadurch gekennzeichnet, dass** das vernetzte Material ein extrudiertes Material ist.

**16.** Kabel nach einem der vorstehenden Ansprüche, **dadurch gekennzeichnet, dass** das vernetzte Material ein Material ist, das aus einer Isolierschicht, einem Schutzmantel und einer Bettung ausgewählt ist.

**17.** Kabel nach einem der vorstehenden Ansprüche, **dadurch gekennzeichnet, dass** die Polymermatrix A mehr als 50 Gew.-% eines oder mehrerer Olefinpolymere mit hydrophiler Einheit umfasst.

**18.** Verfahren zum Herstellen des Kabels nach einem der vorstehenden Ansprüche, **dadurch gekennzeichnet, dass** das Verfahren die folgenden Schritte umfasst:

i. Mischen der polymeren Zusammensetzung;

ii. Auftragen der gemischten polymeren Zusammensetzung um das längliche leitende Element; und

iii. Vernetzen der polymeren Zusammensetzung von Schritt ii, um das vernetzte Material zu erhalten, das das längliche leitende Element umgibt.

## Revendications

**1.** Câble comprenant un élément conducteur allongé et un matériau auto-cicatrisant entourant ledit élément conducteur allongé, **caractérisé en ce que** le matériau auto-cicatrisant est un matériau réticulé obtenu à partir d'une composition polymère comprenant :

A. une matrice de polymère comprenant au moins un polymère d'oléfine comportant un groupement hydrophile, ledit groupement hydrophile contenant des groupes fonctionnels polaires, et

B. au moins un composé amphiphile, en tant qu'additif auto-cicatrisant, le composé amphiphile comprenant :

- une chaîne aliphatique, saturée ou insaturée, comprenant au moins quatre atomes de carbone, en tant que groupement lipophile, et

- un groupement hydrophile,

la composition polymère comprenant plus de 50 % en poids de la matrice de polymère A.

**2.** Câble selon la revendication 1, **caractérisé en ce que** le polymère d'oléfine comportant un groupement hydrophile est un copolymère de vinylacétate d'éthylène.

**3.** Câble selon la revendication 1 ou 2, **caractérisé en ce que** la matrice de polymère A est seulement composée d'un ou plusieurs polymère(s) d'oléfine comportant un groupement hydrophile.

**4.** Câble selon l'une quelconque des revendications précédentes, **caractérisé en ce que** le composé amphiphile est capable de former des interactions intermoléculaires avec le polymère d'oléfine comportant un groupement hydrophile, durant le procédé de cicatrisation.

**5.** Câble selon l'une quelconque des revendications précédentes, **caractérisé en ce que** le composé amphiphile et le polymère d'oléfine comportant un groupement hydrophile sont compatibles l'un avec l'autre.

**6.** Câble selon l'une quelconque des revendications précédentes, **caractérisé en ce que** le groupement hydrophile est choisi parmi un acide carboxylique, des précurseurs d'acides carboxyliques, une forme ionique d'acides carboxyliques, des esters, des amines, des amides, des alcools, un dérivé quelconque de ceux-ci, et une combinaison quelconque de ceux-ci.

**7.** Câble selon l'une quelconque des revendications précédentes, **caractérisé en ce que** le composé amphiphile est un composé polymère choisi parmi les polymères d'oléfine greffés, les polymères comportant des groupements hydrophiles, et un dérivé quelconque de ceux-ci.

**8.** Câble selon l'une quelconque des revendications précédentes, **caractérisé en ce que** le composé amphiphile est un composé non polymère choisi parmi les acides gras et un dérivé quelconque de ceux-ci.

**9.** Câble selon la revendication 8, **caractérisé en ce que** l'acide gras est choisi parmi l'acide oléique, l'acide ricinoléique et un dérivé quelconque de ceux-ci.

**10.** Câble selon la revendication 8 ou 9, **caractérisé en ce que** l'acide gras est constitué de triglycérides d'acide oléique ou de triglycérides d'acide ricinoléique.

**11.** Câble selon la revendication 8 ou 9, **caractérisé en ce que** l'acide gras est choisi parmi les polyols d'huile.

**12.** Câble selon l'une quelconque des revendications précédentes, **caractérisé en ce que** la composition polymère comprend au moins deux composés amphiphiles B.

**13.** Câble selon l'une quelconque des revendications précédentes, **caractérisé en ce que** la composition polymère comprend :

A. la matrice de polymère comprenant au moins un copolymère de vinylacétate d'éthylène ayant une teneur en groupements vinylacétate d'au moins 40 %, et
B. au moins 30 parties en poids du (des) composé(s) amphiphile(s) par rapport à 100 parties en poids de matrice de polymère A.

**14.** Câble selon l'une quelconque des revendications précédentes, **caractérisé en ce que** la composition polymère comprend en outre un peroxyde organique en tant qu'agent de réticulation.

**15.** Câble selon l'une quelconque des revendications précédentes, **caractérisé en ce que** le matériau réticulé est un matériau extrudé.

**16.** Câble selon l'une quelconque des revendications précédentes, **caractérisé en ce que** ledit matériau réticulé est un matériau choisi parmi une couche isolante, une enveloppe de protection et un matelas.

**17.** Câble selon l'une quelconque des revendications précédentes, **caractérisé en ce que** ladite matrice de polymère A comprend plus de 50 % en poids de polymère(s) d'oléfine comportant un groupement hydrophile.

**18.** Procédé de fabrication du câble selon l'une quelconque des revendications précédentes, **caractérisé en ce que** le procédé comprend les étapes suivantes :

i. mélange de la composition polymère ;
ii. application de la composition polymère mélangée autour de l'élément conducteur allongé ; et
iii. réticulation de la composition polymère de l'étape ii, pour obtenir le matériau réticulé entourant l'élément conducteur allongé.

2.8kPa, 80 or 23°C, 48h

4 mm

0.8 mm

|←→| Double-layer overlapping
5 mm

1.4kPa, 80 or 23°C, 48h

4 mm

0.8 mm

Single-layer end-to-end attachment

# FIG.1a

# FIG.1b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2932605